# EUROPÄISCHE PATENTSCHRIFT

(11) **EP 1 022 568 B1**
(45) Veröffentlichungstag und Bekanntmachung des Hinweises auf die Patenterteilung: **23.03.2005**
(21) Anmeldenummer: 00200124.6
(22) Anmeldetag: 12.01.2000
(51) Int. Cl.: G01P 3/481, G01P 3/488

(54) **Anordnung zur Drehzahlmessung**
Device for determining rotational speed
Dispositif pour la détermination de la vitesse de rotation

(30) Priorität: 21.01.1999 DE 19902188
(43) Veröffentlichungstag der Anmeldung: 26.07.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Linke, Stephan, 52064 Aachen (DE); Lütjens, Hans-Werner, 52064 Aachen (DE); Petersen, August, 52064 Aachen (DE); Seidel, Bernd, 52064 Aachen (DE)
(74) Vertreter: Volmer, Georg, Dipl.-Ing.

(56) Entgegenhaltungen:
- EP-A- 0 310 236
- EP-A- 0 457 278
- EP-A- 0 670 472
- EP-A- 0 747 888
- DE-A- 3 426 785
- US-A- 4 802 043

## Beschreibung

Die Erfindung betrifft eine Anordnung zur Messung der Drehzahl eines drehbaren Rades an oder in einem Fahrzeug mit einem mittels Dünnschichttechnik erzeugten Sensor, welcher magnetoresistive Sensorelemente aufweist und mittels welchem ein Magnetfeld gemessen wird, das mittels einer Strukturierung des Rades abhängig von dessen Drehzahl moduliert wird.

Bei derartigen Anordnungen, die häufig in Fahrzeugen zur Messung der Drehzahl eines Rades, auf dem sich das Fahrzeug bewegt, eingesetzt werden, besteht der Wunsch, diese möglichst verträglich gegenüber elektromagnetischer Einstrahlung zu gestalten, meist als besseres EMV-Verhalten bezeichnet. Bei der Anordnung der eingangs genannten Art bildet sich zwischen dem Sensor bzw. dessen Sensorelementen einerseits und dem Rad, das meist metallisch ist, andererseits eine Kapazität, welche für durch elektromagnetische Felder eingestrahlte Störströme einen Strompfad bildet. Ist dieser Strompfad, was meist auch anderweitig durch andere Kapazitäten in dem Fahrzeug gewährleistet ist, geschlossen, so bildet sich ein Störstrom, der den Signalen der Sensorelemente überlagert ist und somit die Auswertung des Signals des Sensors stört oder behindert.

Es ist Aufgabe der Erfindung, eine Anordnung der eingangs genannten Art dahingehend weiterzuentwickeln, dass sie gegen durch elektromagnetische Felder eingestrahlte Störströme, welche gegebenenfalls auch außerhalb des Sensors eingestrahlt werden, unempfindlicher wird.

Diese Aufgabe ist erfindungsgemäß dadurch gelöst, dass an dem Sensor an der dem Rad zugewandten Oberfläche eine elektrisch leitfähige Schicht vorgesehen ist, welche eine ohne die Schicht auftretende kapazitive Kopplung zwischen dem Rad und den Sensorelementen vermindert und welche ihrerseits kapazitiv mit dem Rad gekoppelt ist,
dass die elektrisch leitfähige Schicht, welche aus einem metallischen Material besteht, in Dünnschichttechnik wenigstens auf einer Seite des Sensors mittels Schichtabscheidung auf einer Isolationsschicht erzeugt ist und etwa eine Schichtdicke von 0,2 bis 3 µm aufweist,
dass die elektrisch leitfähige Schicht außerhalb des Substrats, auf dem die Sensorelemente aufgebaut sind, elektrisch kontaktiert ist,
dass die elektrische Kontaktierung mittels nicht-dünnschichttechnischer Mittel vorgesehen ist
und dass mittels der elektrischen Kontaktierung eine Kopplung der elektrisch leitfähigen Schicht mit einem Bezugspotential erfolgt.

Es wird an dem Sensor an der dem Rad zugewandten Oberfläche, wenigstens auf einer Seite des Sensors, eine elektrisch leitfähige Schicht vorgesehen. Diese elektrisch leitfähige Schicht hat dabei die Aufgabe, die kapazitive Kopplung zwischen den Sensorelementen des Sensors einerseits und dem Rad und dessen Zahnstruktur andererseits zu vermindern. Es soll also bei vorgesehener elektrischer leitfähiger Schicht die kapazitive Kopplung zwischen den Sensorelementen und dem Rad gegenüber dem Zustand ohne die Schicht vermindert sein. Damit wird erreicht, dass auch außerhalb des Sensors bzw. der Sensorelemente durch elektromagnetische Felder eingestrahlte Hochfrequenzströme über die zwischen der elektrisch leitfähigen Schicht und dem Rad gebildeten Kapazität fließen. Damit ist die nach wie vor vorhandene Kapazität zwischen den Sensorelementen und dem Rad vermindert, so dass die über diese Kapazität fließenden Störströme vermindert, meist deutlich vermindert, sind. Es wird also durch die elektrisch leitfähige Schicht für eingestrahlte Störströme ein neuer Pfad gebildet, der die Störströme von den Sensorelementen ablenkt.

Die Schicht sollte, um die Kapazität möglichst gut bilden zu können, aus einem metallischen Material bestehen und elektrisch leitfähig sein. Sie ist erfindungsgemäß vorteilhaft in Dünnschichttechnik aufgebracht, so dass sie in einem gleichen Fertigungsprozess wie die Sensorelemente erzeugt werden kann. Die elektrische Schicht ist auf eine Isolationsschicht erzeugt, damit eine vollständige Isolierung zwischen der elektrisch leitfähigen Schicht und den Sensorelementen des Sensors gewährleistet ist. Die elektrisch leitfähige Schicht weist eine Schichtdicke von etwa 0,2 bis 3 µm auf, damit sie ihrerseits so dünn ist, dass auf die elektrisch leitfähige Schicht von außen einwirkende elektromagnetische Felder in dieser Schicht nicht wiederum selbst Störströme bilden, die unerwünscht sind.

Nach einem weiteren Merkmal der Erfindung ist die elektrisch leitfähige Schicht ausschließlich außerhalb des Substrats, auf dem die Sensorelemente erzeugt sind, elektrisch kontaktiert. Dies hat vor allem den Vorteil, daß nach Erzeugung der Sensorelemente, der Isolationsschicht und der elektrisch leitfähigen Schicht vor Kontaktierung der elektrisch leitfähigen Schicht überprüft werden kann, ob eine vollständige elektrische Isolierung zwischen den Schichten, in denen die Sensorelemente gebildet sind, und der elektrisch leitfähigen Schicht gegeben ist. Diese kann zunächst gemessen werden. Erst dann kann vorteilhaft die elektrisch leitfähige Schicht außerhalb des Substrats elektrisch kontaktiert werden. Dabei ist diese elektrische Kontaktierung mit Mitteln erzeugt, die nicht dünnschichttechnischer Art sind, die elektrische Kontaktierung ist also mit anderen Mitteln erzeugt, als die in Dünnschichttechnik erzeugten Schichten der Sensorelemente, der Isolationsschicht und der elektrisch leitfähigen Schicht.

Um die oben beschriebene kapazitive Kopplung zwischen der elektrisch leitfähigen Schicht und dem Rad möglichst gut zu gestalten, ist die elektrisch leitfähige Schicht über eine elektrische Kontaktierung mit einem Bezugspotential gekoppelt, das dem Bezugspotential des Sensors entspricht.

Mit dieser Anordnung ist erreicht, daß nicht nur in dem Sensor, sondern beispielsweise auch in dessen Zuleitungen durch elektromagnetische Felder eingestrahlte Hochfrequenz-Störströme vorzugsweise über die zwischen der elektrisch leitfähigen Schicht und dem Rad des Fahrzeugs gebildete Kapazität fließen. Damit ist ein Fluß von Störströmen über die Sensorelemente vermindert, wenn nicht gar weitgehend ausgeschaltet, so daß die Ströme, die die Sensorelemente liefern und die der Messung der Drehzahl dienen, deutlich weniger mit HF-Störströmen belastet sind.

Ferner ist der Aufbau der elektrisch leitfähigen Schicht auf einfache Weise gelungen, da zur Erzeugung dieser Schicht und der darunter vorgesehenen Isolationsschicht ebenfalls dünnschichttechnische Mittel vorgesehen sind, die üblicherweise auch bei der Erzeugung des Sensors bzw. dessen Sensorelementen eingesetzt werden.

Es ist alles in allem eine deutliche Verminderung des Sensors gegenüber EMV-Strahlung erzielt worden, wobei der dabei vorgesehene zusätzliche Aufwand gering ist.

Ist beispielsweise, wie nach einer Ausgestaltung der Erfindung gemäß Anspruch 2 vorgesehen ist, die Anordnung zur Drehzahlmessung für Zwecke eines Antiblockiersystems vorgesehen, so kommt der verbesserten EMV-Verträglichkeit insofern besondere Bedeutung zu, als die Anordnung des Sensors in den Radkästen bezüglich elektromagnetischer Strahlung besonders sensibel ist und diese Sensoren Zuleitungen aufweisen, die ebenfalls in besonders störstrahlintensiven Bereichen des Fahrzeugs verlegt sind.

Die außerhalb des Substrates der Sensorelemente vorgesehene elektrische Kontaktierung der elektrisch leitfähigen Schicht kann vorteilhaft, wie gemäß einer weiteren Ausgestaltung der Erfindung gemäß Anspruch 3 vorgesehen ist, mittels Bonden erfolgen. Dies ist auch deshalb vorteilhaft, weil die elektrischen Anschlüsse der Sensorelemente an dem Sensor meist ebenfalls mittels Bonden vorgenommen werden. Somit ist für das Bonden der elektrisch leitfähigen Schicht in dem gleichen Arbeitsgang ein elektrischer Kontakt herzustellen, so daß hierfür kaum zusätzlicher Aufwand anfällt.

Vorteilhaft deckt die elektrisch leitfähige Schicht, wie gemäß einer weiteren Ausgestaltung der Erfindung nach Anspruch 4 vorgesehen ist, die dem Rad zugewandte Seite des Sensors ab. Insbesondere auf dieser Seite können die elektrisch leitfähige Schicht die erwünschte Kapazität zwischen ihr und dem Rad bilden und damit die Kapazität zwischen dem Sensor und dem Rad vermindern.

Die elektrischen Signale, die die Sensorelemente liefern, werden meist in einer ersten Stufe mittels einer Auswerteschaltung ausgewertet, die unmittelbar im Bereich der Sensorelemente angeordnet ist. Daher kann vorteilhaft, wie gemäß einer weiteren Ausgestaltung der Erfindung nach Anspruch 5 vorgesehen ist, die elektrisch leitfähige Schicht auch diese Auswerteschaltung wenigstens einseitig mit abdecken und so die EMV-Verträglichkeit weiter verbessern, indem bereits im Bereich der Auswerteelektronik der Pfad zu der Kapazität zu dem Rad hin gelegt wird.

Die elektrisch leitfähige Schicht muß keine vollständig geschlossene Schicht darstellen, sie kann hingegen beispielsweise, wie gemäß einer weiteren Ausgestaltung der Erfindung nach Anspruch 6 vorgesehen ist, auch eine Kammstruktur aufweisen. Auch andere Strukturen sind denkbar, so lange der erwähnte Zweck erfüllt wird.

Vorteilhaft wird als Sensor eine Anordnung gewählt, die, wie gemäß einer weiteren Ausgestaltung nach Anspruch 9 vorgesehen ist, vier magnetoresistive Sensorelemente aufweist, die eine Brücke bilden. Derartige Anordnungen gestatten eine besonders gute Messung und haben sich beispielsweise für Zwecke der ABS-Sensoren weitgehend durchgesetzt.

Nachfolgend wird ein Ausführungsbeispiel der Erfindung anhand der Zeichnung näher erläutert. Es zeigen:
Fig. 1 einen Sensor einer erfindungsgemäßen Anordnung, der teilweise im Schnitt dargestellt ist und
Fig. 2 ein elektrisches Blockschaltbild mit der erfindungsgemäßen Anordnung und dem Sensor gemäß Fig. 1.

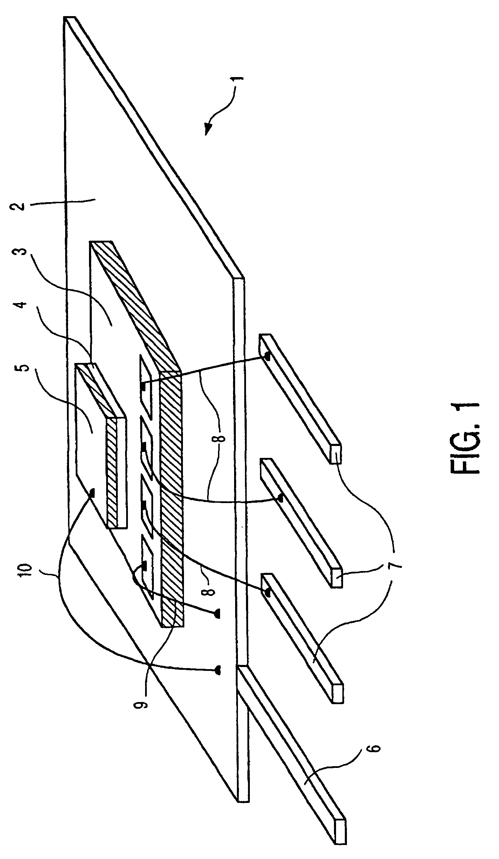

In Fig. 1 ist zunächst nur ein Sensor 1 einer erfindungsgemäßen Anordnung dargestellt. Dieser Sensor 1 ist teilweise im Schnitt dargestellt.

Der Sensor 1 gemäß Fig. 1 ist auf einem metallischen Träger 2 aufgebaut, welcher einerseits als mechanischer Träger dient und andererseits mit Bezugspotential gekoppelt ist. Der Sensor 1 weist eine Sensorschicht 3 auf, die in Dünnschichttechnik erzeugt ist. Auf der Sensorschicht 3 ist eine in Fig. 1 nur teilweise dargestellte Isolationsschicht 4 vorgesehen. Auf der Isolationsschicht 4 ist ebenfalls mittels dünnschichttechnischer Mittel eine elektrisch leitfähige Schicht 5 vorgesehen.

Außen an dem Substrat angeordnet ist eine elektrische Kontaktierung 6, die unmittelbar mit dem metallischen Träger 2 verbunden ist und die mit Bezugspotential gekoppelt ist. Es sind ferner drei weitere Kontaktierungen 7 vorgesehen, welche über Bondanschlüsse 8 mit entsprechenden Anschlüssen der Sensorschicht 3 gekoppelt sind. Über diese Anschlüsse 7 werden Signale der Sensorelemente zu- bzw. abgeführt. Es ist ferner eine Bondung 9 vorgesehen, mittels welcher das Bezugspotential, auf das der metallische Träger 2 gekoppelt ist, ebenfalls an die Sensorelemente geführt wird.

Ferner wird die elektrische Leitschicht 5 mittels einer weiteren Bondung 10 ebenfalls mit dem metallischen Träger 2 gekoppelt, so daß auch die elektrisch leitfähige Schicht 5 mit Bezugspotential gekoppelt ist.

Bei der Darstellung gemäß Fig. 1 ist zu beachten, daß die Schichten 4 und 5 nur im Schnitt dargestellt sind. Tatsächlich bedeckt die Isolationsschicht 4 und insbesondere die elektrisch leitfähige Schicht 5 die Sensorschicht 3 wenigstens auf einer Seite, in der Darstellung gemäß Fig. 1 sinnvollerweise auf der Oberseite, möglichst vollständig. Diese Seite ist auch sinnvollerweise diejenige, welche gegenüber einer Strukturierung des Rades angeordnet ist.

Die Fig. 1 zeigt, daß die Isolationsschicht 4 und die elektrisch leitfähige Schicht 5 ebenfalls wie die Sensorschicht 3 mittels dünnschichttechnischer Mittel erzeugt werden kann. Es sind lediglich zwei weitere Arbeitsschritte zur Erzeugung der beiden Schichten notwendig; es kann hierfür jedoch die gleiche Technologie angewendet werden, so daß der zusätzliche Aufwand gering ist.

Die vollständige Isolation zwischen der elektrisch leitfähigen Schicht 5 und der Sensorschicht 3 kann vor Erzeugung der Bondung 10 geprüft werden. Erst danach kann vorteilhaft die Bondung 10 erzeugt werden.

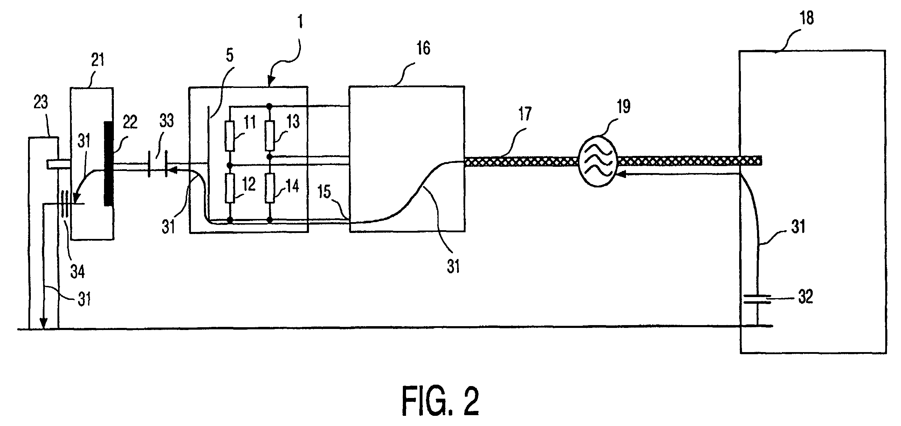

Die Wirkungsweise der elektrisch leitfähigen Schicht 5 des Sensors 1 wird nachfolgend anhand der Fig. 2 näher erläutert, die die elektrotechnischen bzw. physikalischen Zusammenhänge schematisch darstellt.

In Fig. 2 findet sich der Sensor 1 wieder. Er ist hier elektrotechnisch angedeutet, wobei vier Sensorelemente 11, 12, 13 und 14 angedeutet sind, die eine Brücke bilden und die über Anschlüsse 15 mit einer nachgeschalteten Auswerteschaltung 16 gekoppelt sind.

Innerhalb des Sensors 1 ist die elektrisch leitfähige Schicht 5 angedeutet.

Der Auswerteschaltung 16 ist über eine Drahtverbindung 17 eine weitere Auswerteelektronik 18 nachgeschaltet, bei der es sich beispielsweise um eine ABS-Elektronik handeln kann.

Der Sensor 1 ist gegenüber einem drehbaren Rad 21 eines Fahrzeugs angeordnet. Dabei kann es sich beispielsweise um ein Rad handeln, das drehfest mit einem Rad des Fahrzeugs, auf dem dieses sich bewegen kann, gekoppelt ist. Derartige Anordnungen sind bei ABS-Systemen bekannt. An dem Rad 21 ist eine Strukturierung 22 vorgesehen, welche beispielsweise ihrerseits magnetisiert sein kann oder aus einer mehrpolig magnetisierten Schicht bestehen kann und so ein drehzahlabhängig moduliertes magnetisches Feld erzeugt, das mittels der Sensorelemente 11, 12, 13, 14 gemessen und im weiteren mittels der Schaltungen 16 und 18 ausgewertet werden kann. Aus der Modulationsfrequenz dieses Signals kann die Drehzahl des Rades 21 bestimmt werden. Derartige Systeme werden beispielsweise für ABS-Sensoren angewendet.

Das Rad 21, ist direkt oder wenigstens kapazitiv mit dem Fahrzeug 23, an dem es sich befindet, elektrisch gekoppelt.

Bezüglich der elektromagnetischen Verträglichkeit des gesamten Systems hat sich in der Praxis gezeigt, daß eine Störstrahlung weniger in den Sensor 1 direkt als vielmehr beispielsweise über die elektrische Verbindung 17 zwischen den beiden Auswerteschaltungen eingestreut wird. Es wird also durch elektromagnetische Felder in die Leitung 17 ein Hochfrequenzstörstrom eingestrahlt. Quasi als Ersatzschaltbild in der Fig. 2 hierfür eine Stromquelle 19 angedeutet, welche die Erzeugung des Störstromes in der Zuleitung 17 symbolisiert.

Derartige eingestrahlte Störströme suchen sich, beispielsweise in der in der Fig. 2 dargestellten Anordnung in einem Fahrzeug, einen Pfad, über den sie fließen können. Dieser Pfad kann unmittelbar durch elektrische Verbindung erzeugt sein, er kann aber auch durch kapazitive Kopplung geschlossen werden.

In der Figur ist dieser Pfad durch Verbindungen 31 angedeutet. Es ergeben sich dabei teilweise unmittelbare Verbindungen, wie beispielsweise zwischen der Auswerteelektronik 18, der elektrischen Zuleitung 17, der Auswerteschaltung 16 und dem Sensor 1.

In manchen Bereichen ist eine unmittelbare Kontaktierung nicht gegeben, so daß der Strom über Kapazitäten fließt. Dies kann beispielsweise im Bereich zwischen der Auswerteelektronik 18 und Bezugspotential über eine Kapazität 32 der Fall sein. Ferner ist in dem Raum zwischen dem Sensor 1 und dem Rad 21 ebenfalls eine Kapazität 33 gebildet, über die der HF-Störstrom fließen kann. Das Rad 21 ist entweder unmittelbar über eine Befestigung 23 mit dem Bezugspotential des Fahrzeugs verbunden, wenigstens bildet sich aber auch dort eine Kapazität 34, über die der HF-Störstrom fließen kann. Somit ist über die oben erwähnten unmittelbaren Verbindungen sowie über die Kapazitäten 32, 33, 34 und gegebenenfalls weitere in dem Fahrzeug vorhandene Kapazitäten ein geschlossener Stromkreislauf für den eingestreuten HF-Störstrom gebildet.

Wäre der Sensor 1 nach dem Stand der Technik ausgebildet, so wäre die elektrisch leitfähige Schicht 5 nicht vorgesehen und die Kapazität 33 würde sich nicht, wie in der Figur angedeutet, zwischen dieser elektrisch leitfähigen Schicht 5 und dem Rad 21, sondern zwischen dem Sensor 1 bzw. dessen Sensorelementen 11, 12, 13, 14 einerseits und dem Rad andererseits ausbilden. Damit würde der Störstrom unmittelbar durch die Sensorelemente 11, 12, 13, 14 bzw. deren Zuleitungen fließen und würde die Auswertung deren Signale stören.

Erfindungsgemäß ist jedoch die elektrisch leitfähige Schicht 5 vorgesehen, die ihrerseits eine gute kapazitive Kopplung über die Kapazität 33 mit dem Rad 21 erzeugt. Diese Kapazität 33 bildet sich somit überwiegend zwischen der elektrisch leitfähigen Schicht 5 und dem Rad 21 aus. Damit fließt der HF-Störstrom überwiegend über diese Kapazität 33 zwischen der elektrisch leitfähigen Schicht 5 und dem Rad 21. Dies hat zur Folge, daß der Störstrom in den Bereichen der Sensorelemente 11, 12, 13 und 14 bzw. deren Zuleitungen 15 weitgehend abwesend ist. Damit ist eine weitgehende Steuerbefreiung der Auswertesignale der Sensorelemente 11, 12, 13, 14, 15 erzielt worden. Im Ergebnis ist also mittels der elektrisch leitfähigen Schicht ein neuer Pfad für den Störstrom gebildet worden, der diesen von den Bereichen der Sensorelemente ablenkt.

Es spielt bei dieser Anordnung auch keine Rolle, wo der Störstrom genau eingekoppelt ist. Entscheidend ist, daß die kapazitive Kopplung zwischen den Sensorelementen 11, 12, 13, 14 einerseits und dem Rad 21 andererseits durch die elektrisch leitfähige Schicht entscheidend vermindert ist und statt dessen eine für HF-Störströme wirksame Kapazität zwischen der elektrisch leitfähigen Schicht 5 und dem Rad 21 gebildet ist. Somit ist die erfindungsgemäße Anordnung vorteilhaft zur Verbesserung des EMV-Verhaltens geeignet, wobei in jedem Falle eine Störbefreiung der Signale der Sensoren 11, 12, 13 und 14 gelingt, unabhängig davon, wo die Einstrahlung des HF-Störstromes stattfindet. Damit ist die erfindungsgemäße Anordnung einerseits universell einsetzbar und andererseits in ihrem zusätzlichen Aufwand zur Störbefreiung gering.

## Patentansprüche

1. Anordnung zur Messung der Drehzahl eines drehbaren Rades (21) an oder in einem Fahrzeug (23) mit einem mittels Dünnschichttechnik erzeugten Sensor (1), welcher magnetoresistive Sensorelemente (11,12,13,14) aufweist und mittels welchem ein Magnetfeld gemessen wird, das mittels einer Strukturierung (22) des Rades (21) abhängig von dessen Drehzahl moduliert wird, **dadurch gekennzeichnet,**
**dass** an dem Sensor (1) an der dem Rad (21) zugewandten Oberfläche eine elektrisch leitfähige Schicht (5) vorgesehen ist, welche eine ohne die Schicht (5) auftretende kapazitive Kopplung zwischen dem Rad (21) und den Sensorelementen (11,12,13,14) vermindert und welche ihrerseits kapazitiv mit dem Rad (21) gekoppelt ist,
**dass** die elektrisch leitfähige Schicht (5), welche aus einem metallischen Material besteht, in Dünnschichttechnik wenigstens auf der dem Rad (21) zugewandten Seite des Sensors (1) mittels Schichtabscheidung auf einer Isolationsschicht (4) erzeugt ist und etwa eine Schichtdicke von 0,2 bis 3 µm aufweist,
**dass** die elektrisch leitfähige Schicht (5) außerhalb des Substrats (3), auf dem die Sensorelemente (11,12,13,14) aufgebaut sind, elektrisch kontaktiert ist,
**dass** die elektrische Kontaktierung (10) mittels nicht-dünnschichttechnischer Mittel vorgesehen ist
und **dass** mittels der elektrischen Kontaktierung (10) eine Kopplung der elektrisch leitfähigen Schicht (5) mit einem Bezugspotential erfolgt.

2. Anordnung nach Anspruch 1, **dadurch gekennzeichnet,**
**daß** das Rad (21) mit einem Fahrzeugrad, auf dem das Fahrzeug rollbar ist, drehgekoppelt ist und daß der Sensor (1) als Drehzahlsensor für ein Anti-Blockier-System des Fahrzeugs vorgesehen ist.

3. Anordnung nach Anspruch 1, **dadurch gekennzeichnet,**
**daß** die elektrische Kontaktierung (10) der elektrisch leitfähigen Schicht (5) mittels Bonden an dem Sensor (1) erfolgt.

4. Anordnung nach Anspruch 1, **dadurch gekennzeichnet,**
**dass** die elektrisch leitfähige Schicht (5) die Sensorelemente (11,12,13,14) wenigstens auf der dem Rad (21) zugewandten Seite des Sensors (1) vollständig abdeckt.

5. Anordnung nach Anspruch 1 oder 4, **dadurch gekennzeichnet,**
**daß** die Ausgangssignale der Sensorelemente (11,12,13,14) mittels einer Auswerteschaltung (16) ausgewertet werden und daß die elektrisch leitfähige Schicht (5) auch die Auswerteschaltung (16) wenigstens einseitig abdeckt.

6. Anordnung nach Anspruch 1, **dadurch gekennzeichnet,**
**daß** die elektrisch leitfähige Schicht (5) eine Kammstruktur aufweist.

7. Anordnung nach Anspruch 1, **dadurch gekennzeichnet,**
**daß** die Strukturierung (22) des Rades (21) als mehrpolige Magnetisierung oder als mehrpolig magnetisierte Schicht realisiert ist.

8. Anordnung nach Anspruch 1, **dadurch gekennzeichnet,**
**daß** ein Dauermagnet auf der dem Rad (21) abgewandten Seite des Sensors (1) vorgesehen ist.

9. Anordnung nach Anspruch 1, **dadurch gekennzeichnet,**
**daß** der Sensor (1) auf einer Trägerplatte (2) angeordnete und eine Doppel-Brücke bildende magnetoresistive Sensorelemente (11,12,13,14) aufweist.

## Claims

1. A device for determining the rotational speed of a rotatable wheel (21) mounted to or in a vehicle (23) by means of a sensor (1) manufactured by the thin-film technology, which sensor (1) comprises magnetoresistive sensor elements (11, 12, 13, 14) and by means of which sensor (1) a magnetic field is measured which is modulated by means of a structure (22) of the wheel (21) in dependence of the rotary velocity thereof, **characterized in that** an electrically conducting layer (5) is provided on the sensor (1) at the surface thereof facing the wheel (21), which layer (5) reduces a capacitive coupling between the wheel (21) and the sensor elements (11, 12, 13, 14) which would occur without said layer (5), and which layer (5) in its turn is capacitively coupled to the wheel (21),
**in that** the electrically conducting layer (5), which is made of a metal material, is manufactured by a thin-film technique at least at the side of the sensor (1) facing the wheel (21) by means of layer deposition on an insulating layer (4) and has a layer thickness of approximately 0.2 to 3 µm,
**in that** the electrically conducting layer (5) is electrically contacted outside the substrate (3) on which the sensor elements (11, 12, 13, 14) are built up,
**in that** the electrical contacting (10) is provided by means not using the thin-film technology, and
**in that** a coupling of the electrically conducting layer (5) to a reference potential is realized by means of said electrical contacting (10).

2. A device as claimed in claim 1, **characterized in that** the wheel (21) is fixedly coupled so as to rotate along with a vehicle wheel on which the vehicle is movable, and **in that** the sensor (1) is provided as a rotational velocity sensor for an anti-blocking system of the vehicle.

3. A device as claimed in claim 1, **characterized in that** the electrical contacting (10) of the electrically conducting layer (5) is provided by means of bonding to the sensor (1).

4. A device as claimed in claim 1, **characterized in that** the electrically conducting layer (5) fully covers the sensor elements (11, 12, 13, 14) at least at the side of the sensor (1) facing the wheel (21).

5. A device as claimed in claim 1 or 4, **characterized in that** the output signals of the sensor elements (11, 12, 13, 14) are evaluated by an evaluation circuit (16), and **in that** the electrically conducting layer (5) also covers the evaluation circuit (16) at least at one side.

6. A device as claimed in claim 1, **characterized in that** the electrically conducting layer (5) has a comb structure.

7. A device as claimed in claim 1, **characterized in that** the structuring (22) of the wheel (21) is realized as a multipole magnetization or as a multipole magnetized layer.

8. A device as claimed in claim 1, **characterized in that** a permanent magnet is provided on the side of the sensor (1) facing away from the wheel (21).

9. A device as claimed in claim 1, **characterized in that** the sensor (1) comprises magnetoresistive sensor elements (11, 12, 13, 14) which are arranged on a support plate (2) and which form a double bridge circuit.

## Revendications

1. Dispositif de mesure de la vitesse de rotation d'une roue rotative (21) sur ou dans un véhicule (23) avec un capteur (1) produit à l'aide d'une technique en couches minces qui présente des éléments capteurs magnétorésistifs (11, 12, 13, 14) et à l'aide duquel est mesuré un champ magnétique qui est modulé à l'aide d'une structuration (22) de la roue (21) en fonction de sa vitesse de rotation **caractérisé en ce**
**qu'**une couche (5) électriquement conductrice qui réduit le couplage capacitif survenant sans la couche (5) entre la roue (21) et les éléments capteurs (11, 12, 13, 14) et qui est, pour sa part, couplé de manière capacitive avec la roue (21) est prévue sur le capteur (1) sur sa face tournée vers la roue (21),
**que** la couche électriquement conductrice (5) qui se compose d'un matériau métallique est produite dans une technique en couches minces du moins sur la face du capteur (1) tournée vers la roue (21) à l'aide d'un dépôt de couche sur une couche d'isolation (4) et présente environ une épaisseur de couche de 0,2 à 3 µm,
**que** la couche électriquement conductrice (5) est mise en contact électrique en dehors du substrat (3) sur lequel les éléments capteurs (11, 12, 13, 14) sont formés,
**que** le contact électrique (10) est prévu à l'aide de moyens ne faisant pas appel à une technique en couches minces et
**qu'**un couplage de la couche électriquement conductrice (5) intervient à un potentiel de référence à l'aide du contact électrique (10).

2. Dispositif selon la revendication 1, **caractérisé en ce**
**que** la roue (21) est couplée à rotation avec une roue du véhicule sur laquelle le véhicule peut se déplacer et que le capteur (1) est prévu comme capteur de vitesse de rotation par un système d'antiblocage des roues du véhicule.

3. Dispositif selon la revendication 1, **caractérisé en ce**
**que** le contact électrique (10) de la couche électriquement conductrice (5) est assuré à l'aide de bondings sur le capteur (1).

4. Dispositif selon la revendication 1, **caractérisé en ce**
**que** la couche électriquement conductrice (5) recouvre complètement les éléments capteurs (11, 12, 13, 14) du moins sur la face du capteur (1) tournée vers la roue (21).

5. Dispositif selon la revendication 1 ou 4, **caractérisé en ce que** les signaux de sortie des éléments capteurs (11, 12, 13, 14) sont évalués à l'aide d'un circuit d'évaluation (16) et que la couche électriquement conductrice (5) recouvre également le circuit d'évaluation (16), du moins sur une face.

6. Dispositif selon la revendication 1, **caractérisé en ce que** la couche électriquement conductrice (5) présente une structure en peigne.

7. Dispositif selon la revendication 1, **caractérisé en ce que** la structuration (22) de la roue (21) est réalisée comme une magnétisation multipolaire ou comme une couche magnétisée multipolaire.

8. Dispositif selon la revendication 1, **caractérisé en ce qu'**un aimant permanent est prévu sur la face du capteur (1) opposée à la roue (21).

9. Dispositif selon la revendication 1, **caractérisé en ce que** le capteur (1) présente des éléments capteurs (11, 12, 13, 14) magnétorésistifs disposés sur une plaque de support (2) et formant un double pont.
